# EUROPEAN PATENT APPLICATION

(11) **EP 2 075 796 A1**
(43) Date of publication of application: **01.07.2009**
(21) Application number: 07301749.3
(22) Date of filing: 27.12.2007
(51) Int. Cl.: G11B 27/034

(54) **Methods and devices for managing reading, writing and truncating a file system**

(71) Applicant: Thomson Licensing, 92100 Boulogne-Billancourt (FR)
(72) Inventor: Hu, Jian Qiang, Hai Dian District 100085 Beijing (CN); Zhang, Xiao Long, Haidian 100083 Beijing (CN)
(74) Representative: Ruellan-Lemonnier, Brigitte

(57) **Abstract**

This invention provides a file system which includes blocks having identical size and being sequentially numbered, and chunks being sequentially numbered with each chunk comprising at least one block, data in chunks being continuously allocated, wherein the former part of the first block in a chunk is not occupied by data. The size of the unoccupied space will be labeled out. In addition, the invention also provides a reading, writing, and truncating method to read, write, and truncate data from or into the file system.

## Description

### TECHNICAL FIELD

This invention relates to the filed of PVR memories, more particularly, this invention relates to methods and devices for managing, reading, writing and truncating a file system.

### TECHNICAL BACKGROUND

Nowadays Personal Video Recorder (PVR) application in STB is widely used. Users sometimes need to edit their video records, for example, they need to truncate some advertisements from their video records. However, the advertisements may locate anywhere in the video records, so the users may need to truncate data from anywhere of the video record files. That is, the users may need to truncate the advertisements from the header, the middle, or the tail of the video record files.

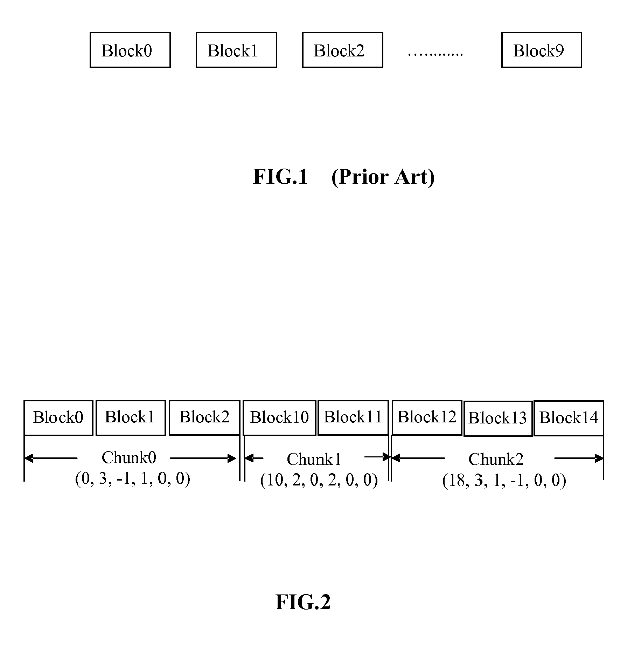

As shown in Fig.1, it is an example of a traditional file system, such as FAT 32 or EXT 2. In this file system a file usually consists of plurality of blocks. In Fig.1 there are 10 blocks in the file. A block is the smallest allocation unit, and contains 16 sectors. There are 512 bytes in a sector, so the size of a block usually is 8K bytes. In a sequential file, all blocks are linked together by the file management. For each block, the link information may be registered as the previous index, e.g. the number of the block goes before the current block, and the next index, e.g. the number of the block goes after the current block. And usually the file management knows where a file starts, i.e. the number of the starting block, and the length of space which is occupied by the file, i.e. how many blocks in this file. The real length of the file may be less than the length of the space occupied by the file.

In this traditional file system, it is easy to truncate data from the end of the file, e.g. to truncate some advertisements. If data is truncated from the end of the file, the truncated data will be released directly. However, it is difficult to delete part of the data from middle of the file, especially from part of some blocks. Since if data is truncated from part of the block, the block will not be a full one (non-full), i.e. there will be less 8K data in the block. In this condition, the traditional process method is to shift the data in the following blocks to fill the non-full block. The reason is that in the traditional file system, the file management only registers the number of the starting block and the length of the file (i.e. how many blocks in the file), so even some data has been truncated from a block, some time will be taken to try to read out this part of data. However, to shift the following blocks to fill the non-full block will take extremely long time, especially for a file with large size.

### CONTENT OF THE INVENTION

In an aspect, a method for managing data in a file system is described. The file system has a plurality of blocks, with all blocks having identical size and being sequentially numbered, at least one block consisting of a chunk, and all chunks being sequentially numbered. for each chunk, data are continuously allocated in the blocks within the chunk. The management method includes a step of labeling out by a descriptor whether the former part of the first block is not occupied by data in the chunk.

In an embodiment, the method for managing data in the file system further includes a step of labeling out by a descriptor whether the latter part of the last block is not occupied by data in the chunk.

In another embodiment, for each chunk, where the chunk starts, the length of data in the chunk, and the links with neighboring chunks will also be labeled out by descriptors.

Further, where the chunk starts refers to the number of the first block in the chunk, the length of data in the chunk refers to the number of blocks in the chunk, and the links with neighboring chunks refers to the number of the chunk goes before the current chunk and the number of the chunk goes after the current chunk.

In another aspect, a method for reading data from a file system is described. The file system has a plurality of blocks, with all blocks having identical size and being sequentially numbered, at least one block consisting of a chunk, and all chunks being sequentially numbered. For each chunk, data are continuously allocated in the blocks within the chunk, and whether there is part of space has not been occupied by data in blocks of the chunk will be labeled out. The reading method includes steps of determining the size of data planned to be read out from the file system, determining the position where the reading operation starts in a chunk, determining the size of available data in the current chunk, which is the size of data from the position where the reading operation starts to the end of the chunk, wherein the part of space that has not been occupied by data in the current chunk will not be counted into the available data, reading out data with a size being a function of the data planned to be read out from the file system and the available data in the current chunk, and if there are still some remaining data need to be read out, going to next chunk and repeating above steps.

In a third aspect, a method for writing data into a file system is elaborated. The file system ha s a plurality of blocks, with all blocks having identical size and sequentially numbered, at least one block consisting of a chunk, and all chunks being sequentially numbered. For each chunk, data are continuously allocated in the blocks within the chunk, and whether there is part of space has not been occupied by data in blocks of the chunk is labeling out. The writing method includes steps of determining the size of data planned to be written into the file system, determining the position where the writing operation starts in a chunk, determining the size of available space in the current chunk, wherein it is the size of sp ace in the current chunk from the position where the writing operation starts to the end of the chunk when the chunk is the last chunk in the file system, otherwise, the labeled out size in the chunk should be excluded, and if there are still some remaining data need to be written into the file system, going to next chunk and repeating above steps.

In a fourth aspect, a method for truncating data from a file system is described. The file system has a plurality of blocks, with all blocks having identical size and being sequentially numbered, at least one block consisting of a chunk, and all chunks being sequentially numbered. For each chunk, data are continuously allocated in the blocks within the chunk and whether there is part of space has not been occupied by data in blocks of the chunk is label ed out. The truncating method includes steps of determining the size of data planned to be truncated from the file system, determining the position where the truncating operation starts in a chunk, truncating a number of data from the current chunk, if the size of data truncated from a block inside the current chunk together with the size of part of space that has not been occupied in the block equals to the identical size of block, releasing the space of this block, and if there are still some data need to be truncate after truncating data from the current chunk, going to next chunk and repeating above steps.

In a fifth aspect, a file managing system is described. The file system includes blocks having identical size and being sequentially numbered, and chunks being sequentially numbered with each chunk comprising at least one block, data in chunks being continuously allocated, wherein the former part of the first block in a chunk is not occupied by data.

In another embodiment, the latter part of the last block in the chunk is not occupied by data.

In a further embodiment, the file management system further includes a storage device which stores a first descriptor describing the size of the former part not occupied by data in the first block of the chunk.

In still another embodiment, the storage device of the file management system further stores a second descriptor describing the size of the latter part not occupied by data in the last block of the chunk.

Further, the storage device of the file management system stores a third descriptor describing the starting position of the chunk.

And the storage device of the file management stores a fourth descriptor describing the length of data in the chunk.

In an embodiment, the storage device of the file management further stores a fifth descriptor and a sixth descriptor describing the number of chunk goes before a current chunk and the number of chunk goes after the current chunk.

In a sixth aspect, an apparatus for reading data from a file system is described. The file system includes blocks having identical size and being sequentially numbered, and chunks being sequentially numbered with each chunk comprising at least one block. At the beginning of the first block and at the end of the last block in a chunk, part of the space is not occupied by data. The reading apparatus comprises a means for determining the size of data planned to be read out from the file system, a means for determining the position where the reading operation starts in a chunk, a means for determining the size of available data in the current chunk, which is the size of data from the position where the reading operation starts to the end of the chunk, wherein the part of space that has not been occupied by data in the current chunk will not be counted into the available data, and a means for reading out data with a size being a function of the data planned to be read out from the file system and the available data in the current chunk.

In still another aspect, an apparatus for writing data from a file system is described. The file system includes blocks having identical size and being sequentially numbered, and chunks being sequentially numbered with each chunk comprising at least one block. At the beginning of the first block and the at the end of the last block and at the end of the last block in a chunk, part of the space is not occupied by data. The writing apparatus comprises a means for determining the size of data planned to be written into the file system, a means for determining the position where the writing operation starts in a chunk, and a means for determining the size of available space in the current chunk, wherein it is the size of space in the current chunk from the position where the writing operation starts to the end of the chunk when the chunk is the last chunk in the file system, otherwise, the labeled out size in the chunk should be excluded.

Lastly, an apparatus for truncating data from a file system is introduced. The file system includes blocks having identical size and being sequentially numbered, and chunks being sequentially numbered with each chunk comprising at least one block. At the beginning of the first block and the at the end of the last block in a chunk, part of the space is not occupied by data. the truncating apparatus comprises a means for determining the size of data planned to be truncated from the file system, a means for determining the position where the truncating operation starts in a chunk, a means for truncating a number of data from the current chunk, and if the size of data truncated from a block inside the current chunk together with the size of part of space that has not been occupied in the block equals to the identical size of block, releasing the space of this block.

### BRIEF DESCRIPTION OF THE DRAWINGS

FIG.1 shows a traditional file system,
FIG.2 shows an embodiment of present file system,
FIG.3 shows another embodiment of present file system,
FIG.4 is a flow chart showing how to calculate the actual size of data in a chunk when performing reading operation from the present file system,
FIG.5 is a flow chart showing an exemplary reading operation from the present file system,
FIG.6 is a flow chart showing how to calculate the actual size of data in a chunk when performing writing operation from the present file system,
FIG.7 is a flow chart showing an exemplary writing operation to the present file system,
FIG.8 is a flow chart showing an exemplary truncating operation in the present file system,
FIG.9 illustrates an exemplary truncating operation truncating data from former part of a chunk,
FIG.10 illustrates an exemplary truncating operation truncating data from latter part of a chunk,
FIG.11 is a flow chart showing an exemplary truncating operation truncating data from middle part of a chunk, and
FIG.12 illustrates an exemplary truncating operation truncating data from middle part of a chunk.

### DETAILED IMPLEMENTATION

The exemplifications set out herein illustrate preferred embodiments of the invention, and such exemplifications should not be construed as limiting the scope of the invention in any manner.

In an embodiment, shown as Fig.2, there is a file consists of 8 blocks with each block having 8K bytes of data. In the file management system, the blocks belong to a file are managed by chunks. A chunk consists of blocks which are continuous in the hard disk. In Fig.2, Chunk 0 consists of Blocks 0~2, Chunk 1 consists of Blocks 10~11, and Chunk2 consists of Blocks 18~20.Though in this embodiment the numbers of blocks in all chunks are different, they can be equal according to implementation. At least 6 descriptors are used to describe each chunk. These 6 descriptors are StartBlockNumber, TotalBlockNumber, PreviousChunkNumber, NextChunkNumber, UnusedSizeInFirstBlock, and UnusedSizeInLastBlock. Wherein the StartBlockNumber indicates the number of the starting block of a chunk, the TotalBlockNumber indicates the total number of blocks in a chunk, the PreviousChunkNumber indicates the number of the chunk goes before the current chunk, similar with the previous index in the prior art, the NextChunkNumber indicates the number of the chunk goes after the current chunk, similar with the next index in the prior art, the UnusedSizeInFirstBlock shows the unused number of bytes in the first block of the chunk and the UnusedSizeInLastBlock shows the unused number of bytes in the last block of the chunk. The last two descriptors are used because after a chunk is truncated from the middle, the unused number of bytes in the last block often appears at the block where the truncation begins and the unused number of bytes in the first block often appears at the block where the truncation ends.

Turn to Fig.2, the Chunks 0~2 are described as (0, 3, -1, 1, 0, 0), (10, 2, 0, 2, 0, 0), (18, 3, 1, -1, 0, 0) respectively. The descriptors of the first chunk are (0, 3, -1, 1, 0, 0), in which the first descriptor 0 indicates that the current chunk starts with Block 0, the second descriptor 3 means that there are 3 blocks in the current chunk, the third descriptor -1 indicates the chunk goes before current chunk is NULL (since the current chunk is the first chunk in the file), the fourth descriptor 1 means that the chunk goes after the current chunk is Chunk 1, and fifth and the sixth descriptors 0 indicates that the empty part of the first block in the current chunk is 0 bytes and the empty part of the last block in the current chunk is 0 bytes, which means all the blocks in the Chunk 0 are full of 8K bytes. The descriptors of Chunk1 and Chunk 2 are similar with those of Chunk 0, please refer to above description. In this embodiment, 'NULL' is used to indicate the index of previous chunk or next chunk of the current chunk is invalid, which means the current chunk is either the first chunk or the last chunk of a file. For example, the index of the previous chunk of Chunk 0 is NULL and the index of the next chunk of Chunk 2 is NULL too.

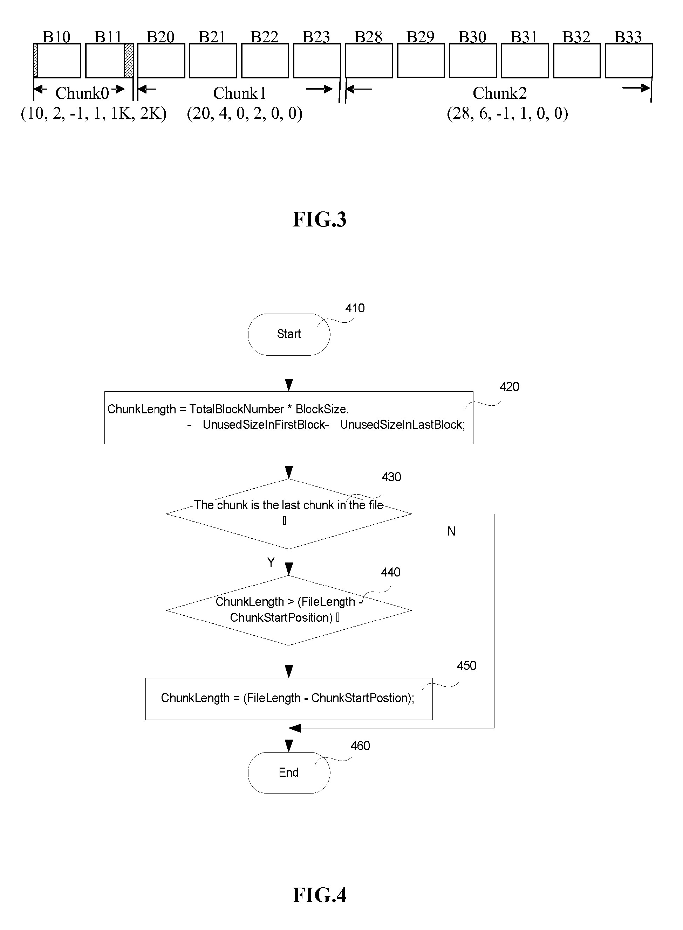

In another example which is shown in Fig. 3, there are three chunks in a file, Chunk 0, Chunk 1 and Chunk 2, and they can be represented by (10, 2, -1, 1, 1024, 2048), (20, 4, 0, 2, 0, 0), and (28, 6, 1, -1, 0, 0) respectively. From the descriptors of these three chunks we can see that Chunk 0 starts at Block 10, its length is 2 blocks with each block having 8K (8*1024) bytes of data, the number of unused data in the first block of Chunk 0 is 1K (1024) bytes, and the number of unused data in the last block of Chunk 0 is 2K (2048) bytes. The second chunk starts at Block 20, its length is 4 blocks with each block having 8K (8*1024) bytes of data, and the number of unused data in the fist block and in the last block of the current Chunk 1 is 0, which means Chunk 1 is full of data. The third chunk starts at Block 28, its length is 6 blocks with each block having 8K (8*1024) bytes of data, and the number of unused data in the first block and in the last block of the current Chunk 2 is 0.

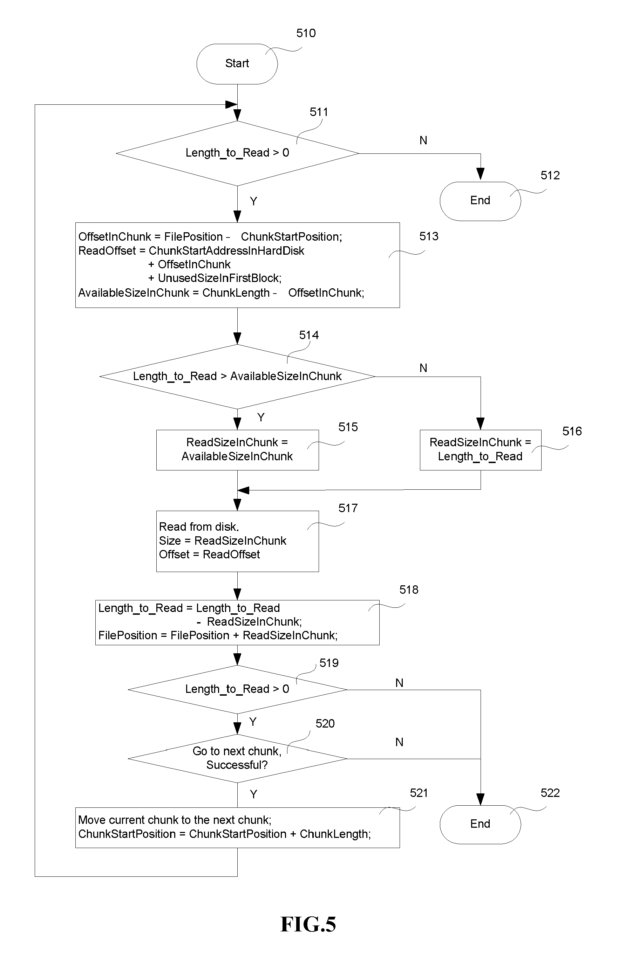

Fig.4 and Fig.5 illustrate the detailed processes of read operation of an embodiment.

With reference to Fig. 4 which shows some processes used to calculate the actual length/size of data in a chunk. The process starts at step 410. At step 420 the actual length of data in a chunk, ChunkLength, is calculated. ChunkLength= TotalBlockNumber*BlockSize-UnusedSizeInFirstBlock-UnusedSizeInLastBlock, where TotalBlockNumber is the total number of blocks in the current chunk. When TotalBlockNumber is multiplied by the size of each block, BlockSize (bytes), we can get the total number of bytes occupied by the current chunk, while the size of UnusedSizeInLastBlock and UnusedSizeInFirstBlock needs to be removed from the total number of bytes occupied by the current chunk, since these spaces are actually empty. Thus we get the actual length of data in the current chunk when the current chunk is determined at step 430 that it is not the last one in the file and the process ends at the step 460. For example, the ChunkLength of the Chunk 0 is 2*8K-1K-2K=13Kbytes.

However, i f the determination at step 430 is yes, the process goes to step 440 to further determine the actual length of the data of the current file occupying the current chunk. This step is used to exclude reserve space in the last chunk. Because when some data are written into a file system, more space will be allocated to accommodate the data so that reallocating space might not occur when further data are written after the current data. To remove the reserved size step 440 is needed. During step 440, it is determined whether the ChunkLength is larger than the difference between FileLength and ChunkStartPosition. In the determination at step 440, FileLength is a parameter to record how many bytes of data in the current file, and the ChunkStartPosition indicates where the current chunk starts or how many bytes of data go before current chunk. We take the Chunk 2 in Fig.3 as an example. The chunk length is 6*8K=48K. The FileLength is (4+6+2)*8K-3K=93K. The starting position of Chunk 2, ChunkStartPosition is 2*8K+4*8K-1K-2K=45Kbytes. If the determination at step 440 is yes, i.e. ChunkLength is larger than the difference between the FileLength and ChunkStartPosition, only ChunkLength of data will be read and the remaining datawill not be considered at this time.

Now turn to Fig. 5. It shows a flow chart elaborating an exemplary read process.

The read process starts at step 510, and it is determined whether the length of the data to be read is larger than 0 at step 511, which is a validity check. If the determination is no, which means there are no data to be read. Then the flow chart goes to step 512 and ends. If there are really some data to be read, then the process goes to step 513 to calculate some values for the read of the file. At step 513, OffsetInChunk is firstly calculated, which is a pointer indicating the offset of the reading operation in the current chunk. For example, the offset of the first available byte of data in a chunk is '0' byte, the offset of the second available byte of data in a chunk is '1'byte, etc. The OffsetInChunk=FilePosition-ChunkStartPosition. File position is the offset in a file. For example, the offset of the first available byte of data in a file is `0' byte, the second available byte of data in a file is '1' byte, etc. Take also the Chunk 0 in Fig.3 as an example. The file is read from the first byte of data in Chunk 0. For the first byte of data in Chunk 0 also the first byte of data the file, the FilePosition is 0, the ChunkStartPosition is 0, so the OffsetInChunk is 0 too. If the file is read from the fifth byte of data, then the FilePosition is 5bytes and the ChunkStartPosition is 0 byte. So the OffsetInChunk is 5bytes. Then the physical position of the first byte of data in Chunk 1 is calculated, which is ReadOffset=ChunkStartAddressInHardDisk+OffsetInChunk+UnusedSizeInFirstBloc k. ChunkStartAddressInHardDisk is the address of the current chunk in the hard disk. So for the Chunk 1, the UnusedSizeInFirstBlock is 1KB, and the ReadOffset is ChunkStartAddressHardDisk plus 1KB, which means the application first finds the physical position of the Chunk 1 then move 1KB offset and gets to the actual position of the data to be read. It is also determined the available data can be read from the current chunk, AvailableSizeInChunk = ChunkLength-OffsetInChunk. For the Chunk 1, the AvailableSizeInChunk is 13Kbytes.

It is further determined at step 514 whether the number of data to be read, Length_to_Read, is larger than the available data, AvailableSizeInChunk in the current chunk. This step is used to determine whether current chunk is enough to be read. If more data need to be read, i.e. yes at step 514, all the data in the current chunk need to be read out. Set ReadSizeInChunk=AvailableSizeInChunk at step 515. If the determination at step 514 is no, which means there are less data to be read than the number of data in the current chunk, then the flow chart goes to step 516 to set the Length_to_ Read to ReadSizeInChunk. After the processes at step 515 and 516, the process goes to step 517 to perform the reading operation, reading ReadSizeInChunk of data from the position ReadOffset. After the read operation, the process goes to step 518 to update the parameters Length_to_Read and FilePosition, in which the Length_to_Read is updated to Length_to_Read-ReadSizeInChunk, since ReadSizeInChunk of data have been read out per the processes above, and the FilePostion=FilePosition+ReadSizeInChunk.

Further, at step 519 it is determined whether the data of the file has been totally read out. If the determination is yes, i.e, the updated Length_to_Read is larger than 0, not all the data of the current file have been read out and the application move to next chunk to perform the subsequent read process at step 520 and 521. And at step 521, the ChunkStartPosition is updated to the previous ChunkStartPosion plus the previous ChunkLength, which is the ChunkStartPosition of the next chunk. If the determination at step 519 is no, which means all the data of the current file have been read out, so the process ends at step 522.

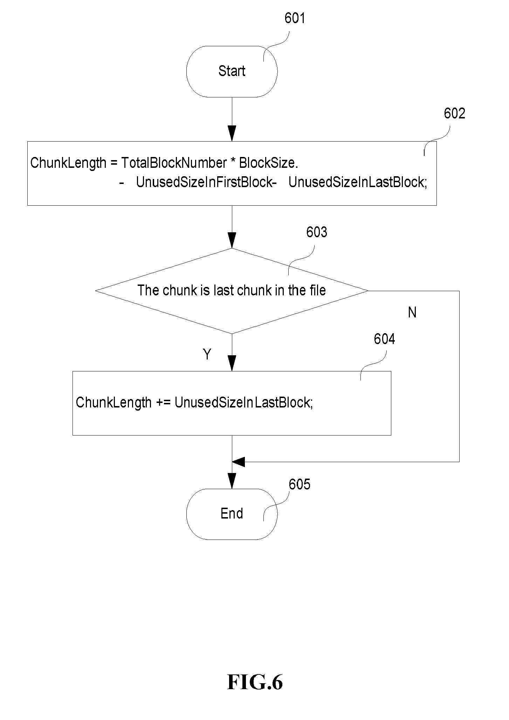

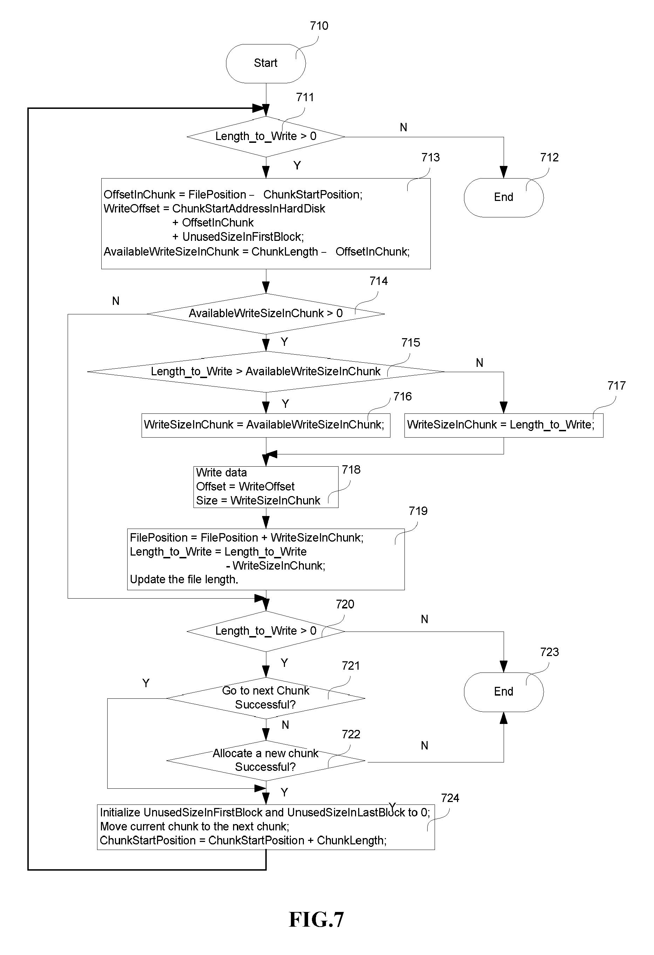

With reference Fig. 6 and Fig.7, we explain an exemplary writing operation. Signs/labels/identifiers similar with those in Fig. 4 and Fig.5 will not be further elaborated.

Fig.6 shows a flow chart illustrating the calculation of the available length can be written in a chunk. The process starts at step 601. At step 602, it is determined the actual length of data in the current chunk, which is similar with the operation during the read process of Fig. 4 and will not be described here. Then at step 603, it is determined whether the current chunk is the last chunk in the file. If the determination is no, the process goes to step 605 and ends. If the determination is yes, the process goes to step 604, where the available length can be written in the current chunk is the value gotten from step 602 plus the value UnusedSizeInLastBlock of the last chunk of the file.

In Fig. 7, a detailed writing process is elaborated.

The writing process starts at step 710 and then goes to step 712 where it is determined whether the length of data to be written is valid. If the determination is no, the process goes to step 712 and ends. If yes, the process goes to step 713 to calculate the position to be written in the current chunk, the position mapped to the hard disk, and how many bytes of data can be written into the current chunk. These three values are represented by OffsetInChunk, WriteOffset, and AvailableWriteSizeInChunk. The calculation of OffsetInChunk here is the same with that during the read process. However, the OffsetInChunk here is used to calculate the position where the writing process starting in the current chunk. WriteOffset indicates the actual physical position to write the current file and its calculation process is similar with the ReadOffset during the read process of Fig.4. AvailableWriteSizeInChunk shows the size can be written in the current chunk, whose calculation process is similar with AvailableSizeInChunk during the read process, except that the ChunkLength is calculated by process in Fig. 6. At step 714 it is determined whether there is space in the current chunk can be written. That is whether the AvailableWriteSizeInChunk is larger than 0. If no, the process goes to 720 to further consider the possibility of using the next chunk. If the determination at step 714 is yes, then it is determined at step 715 whether the length of the data to write, Length_to_Write is larger than the size that can be used for the writing operation, AvailableWriteSizeInChunk. If the determination at step 715 is yes, which means the size can be written in the current chunk is not enough for the data to be written, so more chunks are needed. Then the process goes to step 716 and data with the size AvailableWriteSizeInChunk is set to WriteSizeInChunk for the writing operation at step 718. If the determination is no, which means there is enough space for the data to be written into current chunk. So at step 717, set Length_to_Write to WriteSizeInChunk and the process goes to step 718 where WriteSizeInChunk of data are written from the position WriteOffset.

Subsequently, the original FilePosition moves to the position determined by original FilePosition+WriteSizeInChunk. And the size of the remaining data to be written of the file is changed to the original Length_to_Write subtracts WriteSizeInChunk(already written into the chunks).

Since more chunks may be needed for the subsequent writing process according to the determination at step 715, it is then determined at step 720, whether there are still some data to write. If the answer is yes, then move to the next chunk to perform the writing process, as shown in step 721 and 722. And then at step 724, the UnusedSizeInFirstBlock and UnusedSizeInLastBlock is initialized into 0 and move to the next chunk. The point to the position where the writing operation starts is changed to ChunkStartPosition=ChunkStartPosition+ChunkLength.

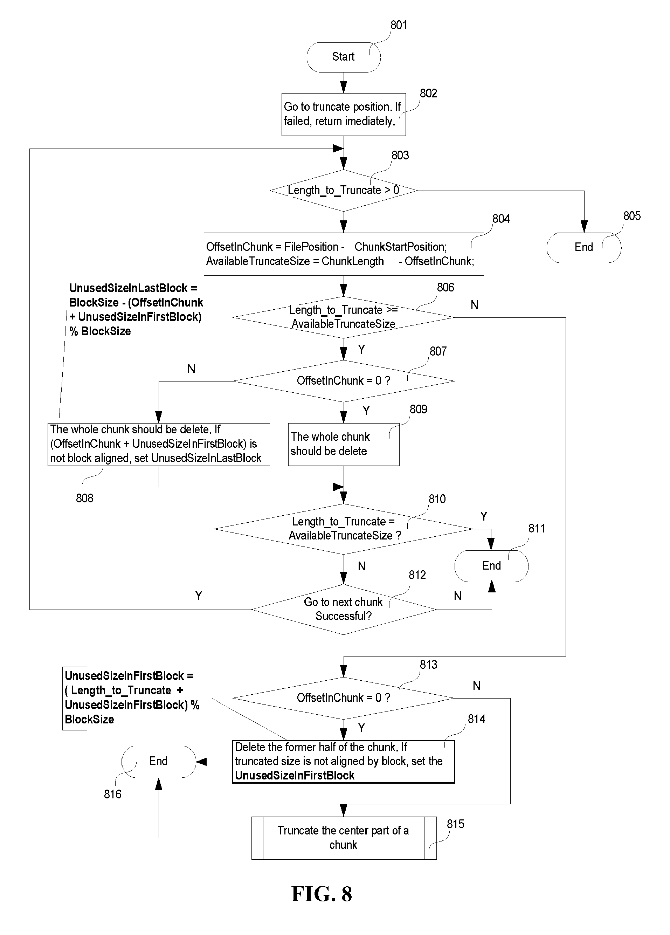

There is another important process, truncating some data from the file system. This important process is shown in Figs.8-11.

As shown in Fig.8, it is a flow chart illustrating an exemplary truncation operation process. This process starts at step 801. And then the step goes to 802 to find out the position the truncation starts. This step is a validity check process. After that, it is determined whether the number of data to be truncated is a valid value at step 803. If no, the process goes to 805 and ends. If yes, the position, OffsetInChunk where the truncation starts and the number of data available to be truncated in the current chunk are deter mined at step 804. OffsetInChunk is calculated by using formula OffsetInChunk=FilePosition-ChunkStartPosition, and AvailableTruncateSize is calculated by the formula AvailableTruncateSize=ChunkLength-OffsetInChunk. Then the process goes to step 806 where it is determined whether the length of data to be truncated, Length_to_Truncate is not less than the size of the available data in the current chunk. If the determination at step 806 is no, which means that there are enough data in the current chunk available for truncating. Then the process goes through steps 813~816 to carry out the truncation operation accordingly.

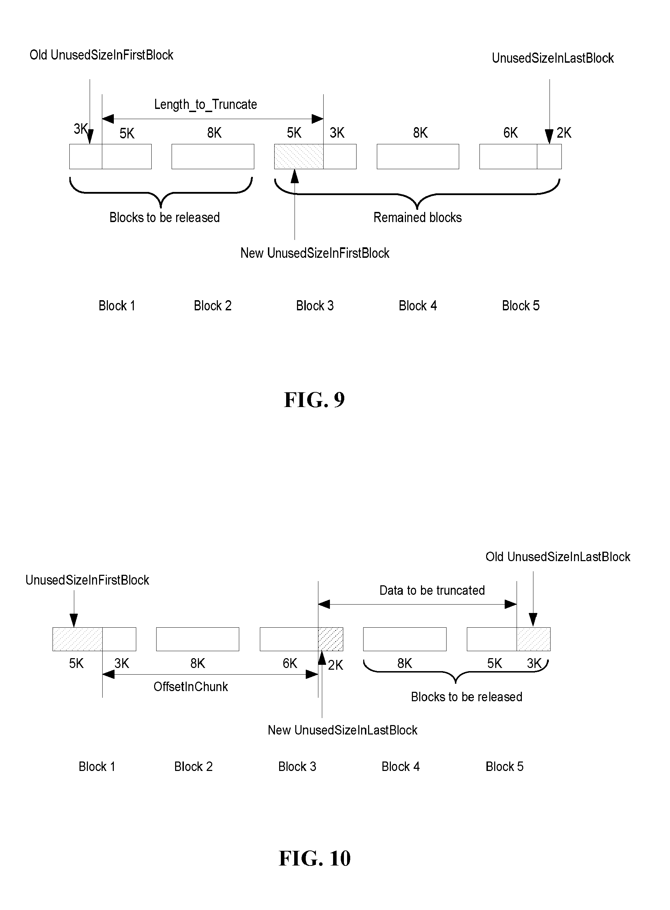

At step 813, it is determined whether OffsetInChunk is equal to 0. This step is to decide whether the truncating process starts from the first byte of data of the chunk. If the determination is no, which means the truncation operation of the current chunk should start from middle of the current chunk, the process goes to step 815 where the current chunk is truncated from a position indicated by OffsetInChunk. At the same time because the determination at step 806 is no, showing there are more data available in the current chunk than the number of data need to be truncated and there should be some data left in the current chunk, so only central part of the current chunk is truncated at the step 815 and the process ends at step 816. If the determination at step 813 is yes, which means the truncation operation starts from the beginning of the current chunk. And also because the determination at step 806 is no, showing there are more available data than the number of data need to be truncated, the former part of the current chunk is deleted at step 814. When performing the truncation operation from the former part of the current chunk, the former part of the first block among the remaining current blocks may be partly truncated. So it may not be a full block. Or in other words it is not aligned. There will be a new UnusedSizeInFirstBlock describing the truncated size from the former part of the remaining first block of the current chunk. The new UnusedSizeInFirstBlock is calculated by formula UnusedSizeInFirstBlock=(Length_to_truncate+UnusedSizeInFirstBlock)%BlockSize . (Length_to_truncate+UnusedSizeInFirstBlock) means the space size occupied need to be release. '%' operation means getting the arithmetical compliment of the division. If the arithmetical compliment is not zero, it means there is space that is not occupied by data in the former part of the first block of the remaining chunk after truncation, so it is just remembered in the descriptor `UnusedSizeInFirstBlock'. An example is shown in Fig. 9.

In Fig.9, there are 5 blocks in the current chunk, which are Blocks 1~5. There is a 3Kbytes unused space at the header of the Block 1 and a 2Kbytes unused space at the end of the Block 5. That is the UnusedSizeInFirstBlock of the current chunk is 3Kbytes and the UnusedSizeInLastBlock of the current chunk is 2Kbytes. The truncation starts from the first data in the Block 1, and 18Kbytes of data will be truncated. So the Length_to_truncate will be 18Kbytes. After the truncation, the Blocks 1∼2 will be released since they are totally deleted, the UnusedSizeInLastBlock for the chunk after truncation will be the same with that of the original chunk before the truncation, and the UnusedSizeInFirstBlock will be changed to (Length_to_truncate+UnusedSizeInFirstBlock)%BlockSize=(18+3)%8=5Kbytes.

If the determination at step 806 is yes, which means even the current chunk is truncated, it is not enough. In this condition, the process goes to step 807, where it is determined whether the truncation of current chunk is from middle or beginning. If the determination is no, which means the truncation operation is from the middle of the current chunk, the process goes to step 808 and delete the space in the chunk from the OffsetInChunk position. Since the determination at step 806 is yes, showing the data from the current OffserInChunk should be deleted, and some data at the beginning of the chunk still remain, if the total number of UnusedSizeInFirstBlock of the current chunk together with the size OffsetInChunk of data does not consist a full block (full of 8Kbytes), there should be some space unused at the end of current chunk, so at the step 808, label out the new UnusedSizeInLastBlock of the current chunk. And the new UnusedSizeInLastBlock is calculated by the following formula, UnusedSizeInLastBlock=BlockSize-(OffsetInChunk+UnusedSizeInFirstBlock)%BlockSize . Here 'OffsetInChunk + UnusedSizeInFirstBlock' means some data still remain in the chunk. `%' operation means obtaining arithmetical compliment of the division. After '%' opera tion, the remained data in the new last block are obtained. It is subtracted from BlockSize to get the unused size in the last block. Fig. 10 is an example illustrating this process.

In Fig.10, there are 5 blocks, Blocks 1∼5 in the current chunk. There is 5Kbytes of unused space at the former part of the Block 1, and 3Kbytes of used space at the end part of the Block 5. So the UnusedSizeInFirstBlock is 5Kbytes and the UnusedSizeInLastBlock is 3Kbytes. A truncation operation starts from the 6Kbytes in Block 3 and 15Kbytes of data will be truncated. So the OffsetInChunk will be 17Kbytes. After the truncation, Blocks 4~5 will be released, the UnusedSizeInFirstBlock will not change for the current chunk, and there will be a new UnusedSizeInLastBlock value. This new value will be BlockSize-(OffsetInChunk+UnusedSizeInFirstBlock)%BlockSize=8K-((17+5)%8)K=8 K-6K=2Kbytes.

However, if the determination at step 807 is yes, which means the truncation operation starts from the beginning of the current chunk. And also because the termination at step 806 is yes for the step 807, the whole chunk is deleted at step 809. After this operation the process goes to the next chunk and return to step 803.

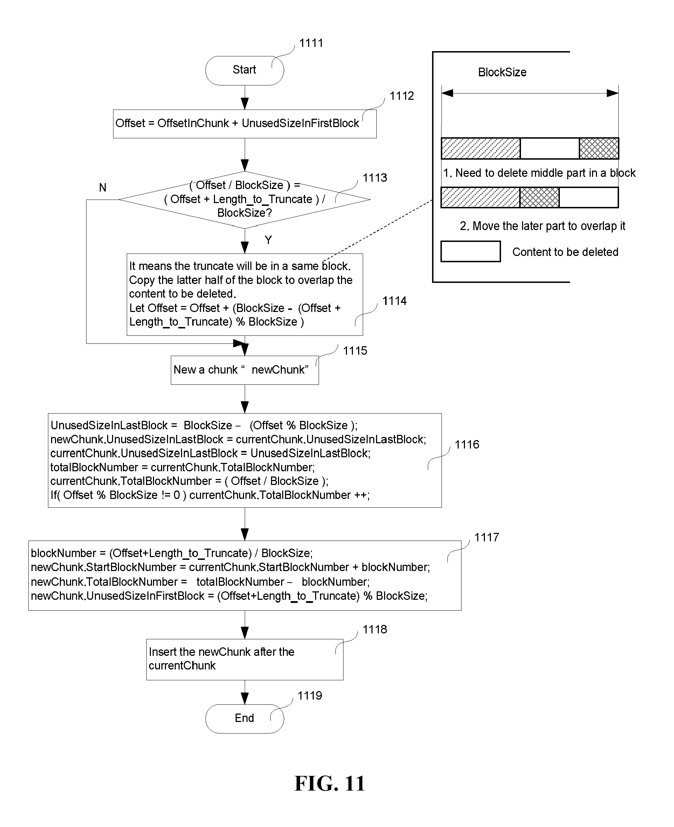

If the truncation in Fig.8 is truncating central part of a chunk, i.e. the process at step 815, the chunk is separated into two chunks. Fig.11 illustrates operations handling this condition. The process starts at step 1111. And then at step 1112, descriptor Offset is used to record the space occupied by the unused and remaining part of the original chunk, as calculated by Offset=OffsetInChunk+UnusedSizeInChunk. Then it is determined at step 1113 whether the truncation is carried on a same block in the chunk, i.e. truncating central part of a block. The determining method is to determine whether (Offset/BlockSize) = (Offset+Length_to_Truncate) /BlockSize. Here, '/' is an operation which will get the integral part of the result. If the determination at step 1113 is no, it means some whole blocks of the chunk are truncated from central part of the current chunk and the current chunk is separated into two chunks. If the determination at step 1113 is yes, it means that the truncation operation occurs in central part of a block. And the process goes to step 1114, where the latter part of the block will be copied to overlap the content to be truncated, with the value of the Offset being updated by the original value of Offset plus (BlockSize-(Offset+Length_to_Truncate)%BlockSize).After the processes at step 1115, the values of some identifiers are updated at steps 1116 and 1117.

The descriptors of the new chunk will be set up and some of the descriptors of the original chunk will be changed during step 1116 and 1117.

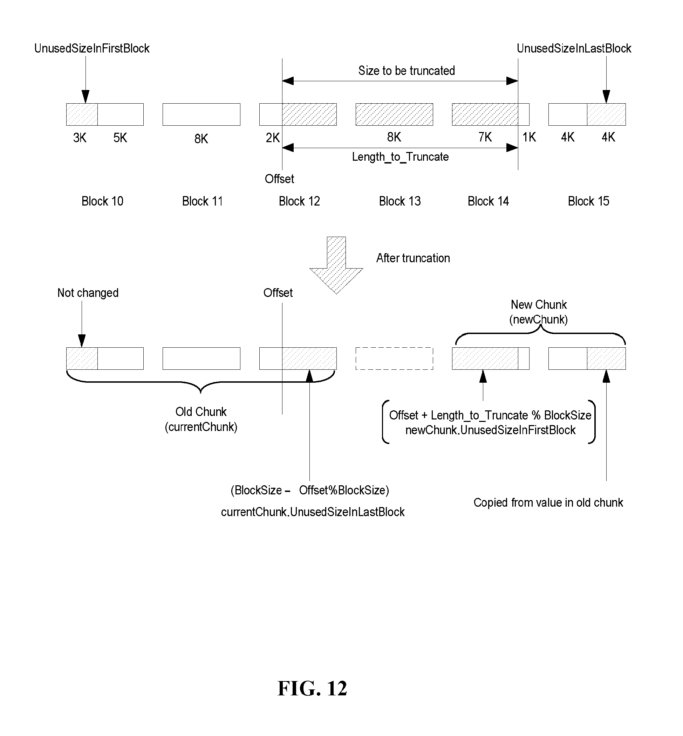

These processes during steps 1116 and 1117 will be further described combined with Fig.12. In Fig.12, there are 6 blocks in the current chunk, e.g. Chunk 5, with the StartBlockNumer being Block 10, the TotalBlockNumber being 6 blocks, the PreviousChunkNumber being Chunk 4, the NextChunkNumber being Chunk 6, UnusedSizeInFirstBlock being 3Kbytes and the UnusedSizeInLastBlock being 4 Kbytes.

When performing the truncation operation, the OffsetInChunk is 15kbytes and the Length_to_Truncate is 21Kbytes, which means 21Kbytes of data will be truncated from the position after 15Kbytes. So the Offset is OffsetInChunk+UnusedSizeInFirstBlock=15K+3K=18Kbytes. According to step 1113, because (OffsetBlock)=(18K/8K) ≠ ((Offset)+Length_to_Truncate) = ((18K+21K)/8K), the truncation doesn't occur in a same chunk. After the truncation, the original Chunk 5 is changed to a new Chunk 5 and another chunk, for example Chunk 8, if there are 7 chunks in the original file system. For the new Chunk 5, the StartBlockNumer is not changed. Since at step 1116, (Offset %BlockSize)=(18K% 8K)=2≠0, ((Offset/BlockSize)+1) will be the TotalBlockNumber of the new Chunk 5, which is changed to 3 blocks. The PreviousChunkNumber of the new Chunk 5 will be the same with that of the original Chunk 5. The NextChunkNumber is changed to Chunk 8. The UnusedSizeInFirstBlock of the new Chunk 5 is the same with that of the original Chunk 5. And the UnusedSizeInLastBlock of the new Chunk 5 will be BlockSize-(Offset%BlockSize)=8K-(18%8)K=8K-2K=6Kbytes.

For the Chunk 8, the StartBlockNumer is the StartBlockNumber of the new Chunk 5 plus (Offset+Length_to_Truncate)/BlockSize, which is 10+ (18K+21K)/8K=10+4=14, i.e. Block 14. The TotalBlockNumber is the TotalBlockNumber of the original Chunk 5 subtracts (Offset+Length_to_Truncate)/BlockSize. That is 6-4=2, i.e. there are 2 blocks in the Chunk 8. The PreviousChunkNumber of Chunk 8 is Chunk 5 and the NextChunkNumber is Chunk 6. The UnusedSizeInFirstBlock of the Chunk 8 is (Offset+Length-to-Truncate)%BlockSize=(18+21)%8=7Kbytes, and the UnusedSizeInLastBlock has the same size with the original Chunk 5, which is 4Kbytes. The Block 13 is totally deleted from the file system so this space will be released.

To manage the file system, a management system is needed. The file system includes blocks having identical size and being sequentially numbered, and chunks being sequentially numbered with each chunk comprising at least one block, data in chunks being continuously allocated, wherein the former part of the first block in a chunk is not occupied by data and the latter part of the last block in the chunk is not occupied by data. There is also a storage device in the file system, which stores a first descriptor describing the size of the former part not occupied by data in the first block of the chunk. a second descriptor describing the size of the latter part not occupied by data in the last block of the chunk, a third descriptor describing the starting position of the chunk, a fourth descriptor describing the length of data in the chunk, a fifth descriptor and a sixth descriptor describing the number of chunk goes before a current chunk and the number of chunk goes after the current chunk.

To perform the reading operation illustrated in Fig. 4 and Fig.5, a reading apparatus is needed. The reading apparatus comprises a means for determining the size of data planned to be read out from the file system, a means for determining the position where the reading operation starts in a chunk, a means for determining the size of available data in the current chunk, which is the size of data from the position where the reading operation starts to the end of the chunk, wherein the part of space that has not been occupied by data in the current chunk will not be counted into the available data, and a means for reading out data with a size being a function of the data planned to be read out from the file system and the available data in the current chunk.

To carry out the writing operation, an apparatus for writing data from the file system is needed. The writing apparatus comprises a means for determining the size of data planned to be written into the file system, a means for determining the position where the writing operation starts in a chunk, and a means for determining the size of available space in the current chunk, wherein it is the size of space in the current chunk from the position where the writing operation starts to the end of the chunk when the chunk is the last chunk in the file system, otherwise, the labeled out size in the chunk should be excluded.

Lastly, an apparatus for truncating data from a file system is introduced. The file system includes blocks having identical size and being sequentially numbered, and chunks being sequentially numbered with each chunk comprising at least one block. At the beginning of the first block and the at the end of the last block in a chunk, part of the space is not occupied by data. the truncating apparatus comprises a means for determining the size of data planned to be truncated from the file system, a means for determining the position where the truncating operation starts in a chunk, a means for truncating a number of data from the current chunk, and if the size of data truncated from a block inside the current chunk together with the size of part of space that has not been occupied in the block equals to the identical si ze of block, releasing the space of this block.

A number of implementations have been described. Nevertheless, it will be understood that various modifications may be made. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the following claims.

## Claims

1. A method for managing data in a file system, the file system having a plurality of blocks, with all blocks having identical size and being sequentially numbered, at least one block consisting of a chunk, and all chunks being sequentially numbered, for each chunk, data being continuously allocated in the blocks within the chunk, the data management method including a step of labeling out by a descriptor whether the former part of the first block is not occupied by data in the chunk.

2. The method for managing data in the file system according to claim1,
wherein it further includes a step of labeling out by a descriptor whether the latter part of the last block is not occupied by data in the chunk.

3. The method for managing data in the file system according to claim 2,
wherein for each chunk, where the chunk starts, the length of data in the chunk, and the links with neighboring chunks will also be labeled out by descriptors.

4. The method for managing data in the file system according to claim 3,
wherein where the chunk starts refers to the number of the first block in the chunk, the length of data in the chunk refers to the number of blocks in the chunk, and the links with neighboring chunks refer s to the number of the chunk goes before the current chunk and the number of the chunk goes after the current chunk.

5. A method for reading data from a file system, the file system having a plurality of blocks, with all blocks having identical size and being sequentially numbered, at least one block consisting of a chunk, and all chunks being sequentially numbered, for each chunk, data being continuously allocated in the blocks within the chunk, and whether there is part of space has not been occupied by data in blocks of the chunk being labeled out, wherein the reading method includes steps of
determining the size of data planned to be read out from the file system,
determining the position where the reading operation starts in a chunk,
determining the size of available data in the current chunk, which is the size of data from the position where the reading operation starts to the end of the chunk,
wherein the part of space that has not been occupied by data in the current chunk will not be counted into the available data,
reading out data with a size being a function of the data planned to be read out from the file system and the available data in the current chunk, and
if there are still some remaining data need to be read out, going to next chunk and repeating above steps.

6. The method for reading data from the file system according to claim 5, reading out data with a size being the same with that of data planned to be read out, if the size of available data is not less than the size of data planned to be read out from the file system,
otherwise, reading out data with a size being the same with that of available data.

7. The method for reading data from the file system according to claim 6,
wherein the space that has not been occupied by data occurs in the former part of the first block and/or in the latter part of the last block in the chunk.

8. The method for reading data from the file system according to claim 7,
wherein the position where the reading operation starts is a function of the size of the part of space that has not been occupied by data in chunks going before the current chunk and the size of the part of space that has not been occupied by data in the former part of the first block in the current chunk.

9. The method for reading data from the file system according to claim 8,
wherein the position where the reading operation starts is a physical address in the file system.

10. The method for reading data from the file system according to any of claims 5 to 9, wherein for each chunk, where the chunk starts, the length of data in the chunk, and the links with neighboring chunks will also be labeled out by descriptors.

11. The method for reading data from the file system according to claim 10,
wherein where the chunk starts refers to the number of the first block in the chunk, the length of data in the chunk refers to the number of blocks in the chunk, and the links with neighboring chunks refers to the number of the chunk goes before the current chunk and the number of the chunk goes after the current chunk.

12. A method for writing data into a file system, the file system having a plurality of blocks, with all blocks having identical size and sequentially numbered, at least one block consisting of a chunk, and all chunks being sequentially numbered, for each chunk, data being continuously allocated in the blocks within the chunk, and whether there is part of space has not been occupied by data in blocks of the chunk being labeled out, wherein the writing method includes steps of
determining the size of data planned to be written into the file system,
determining the position where the writing operation starts in a chunk,
determining the size of available space in the current chunk, wherein it is the size of space in the current chunk from the position where the writing operation starts to the end of the chunk when the chunk is the last chunk in the file system, otherwise, the labeled out size in the chunk should be excluded, and
if there are still some remaining data need to be written into the file system, going to next chunk and repeating above steps.

13. The method for writing data into a file system according to claim 12,
wherein the unoccupied space includes the space in the former part of the first block and/or the space in the latter part of the last block in the chunk.

14. The method for writing data into a file system according to claim 13,
wherein each chunk is also described by where the chunk starts, the length of data in the chunk, and the links with neighboring chunks.

15. The method for writing data into the file system according to claim 14,
wherein where the chunk starts refers to the number of the first block in the chunk, the length of data in the chunk refers to the number of blocks in the chunk, and the links with neighboring chunks refers to the number of the chunk goes before the current chunk and the number of the chunk goes after the current chunk.

16. A method for truncating data from a file system, the file system having a plurality of blocks, with all blocks having identical size and being sequentially numbered, at least one block consisting of a chunk, and all chunks being sequentially numbered, for each chunk, data being continuously allocated in the blocks within the chunk and whether there is part of space has not been occupied by data in blocks of the chunk being labeled out, wherein the truncating method includes steps of
determining the size of data planned to be truncated from the file system,
determining the position where the truncating operation starts in a chunk,
truncating a number of data from the current chunk,
if the size of data truncated from a block inside the current chunk together with the size of part of space that has not been occupied in the block equals to the identical size of block, releasing the space of this block, and
if there are still some data need to be truncate after truncating data from the current chunk, going to next chunk and repeating above steps.

17. The method for truncating data in the file system according to claim16,
wherein the space that has not been occupied by data occurs in the former part of the first block and/or in the latter part of the last block in the chunk.

18. The method for truncating data from the file system according to claim 17,
wherein for each chunk, where the chunk starts, the length of data in the chunk, and the links with neighboring chunks and after the truncation will also be labeled out.

19. The method for truncating data from the file system according to claim 18,
wherein where the chunk starts refers to the number of the first block in the chunk, the length of data in the chunk refers to the number of blocks in the chunk, and the links with neighboring chunks refers to the number of the chunk goes before the current chunk and the number of the chunk goes after the current chunk.

20. The method for truncating data from the file system according to claim 19,
wherein the position where the truncating operation starts in the chunk is a function of the size of space that has not been occupied by data in the chunks going before the current chunk and the size of space that has not been occupied in the former part of the first block in the current chunk.

21. The method for truncating data from the file system according to claim 20,
wherein the size of the number of data truncated from the current chunk is a function of the size of data planned to be truncated from the file system and the size of available data from the truncating operation starting position to the end of the chunk.

22. The method for truncating data from the file system according to claim 21,
wherein if the size of data planned to be truncated from the file system is not less than the size of available data, the size of the number of data truncated from the current chunk is equal to the size of available data, else the size of the number of data truncated from the current chunk is equal to the size of data planned to be truncated from the file system.

23. The method for truncating data from a file system according to claim 22,
wherein it further includes a step of
relabeling the descriptors for the remaining part of the current chunk after the truncation if only the former part or the latter part of the current chunk is truncated.

24. The method for truncating data from a file system according to claim 22,
wherein it further includes a step of
relabeling the descriptors for the first new chunk which includes blocks goes before the block where the truncation starts, and if only part of data are truncated from the block where the truncation starts, the first new chunk also includes this block, when middle part of the current chunk is truncated.

25. The method for truncating data from a file system according to claim 24,
wherein it further includes a step of
labeling the descriptors for the second new chunk which includes blocks go after the block where the truncation occurs in the current chunk, if the truncation starts from a block in the middle of the current chunk and ends in the same block.

26. The method for truncating data from a file system according to claim 25,
wherein before the step of labeling the descriptors for the second new chunk, there is a step of moving the remaining data from the position where the truncation ends to the position where the truncation starts.

27. The method for truncating data from a file system according to claim 24,
wherein it further includes a step of
if the truncation starts from a block in the middle of the current chunk and ends not in the same block, labeling the descriptors for the second new chunk which includes blocks go after the block where the truncation ends and the block where the truncation ends if only part of data are truncated from the block.

28. The method for truncating data from a file system according to any of claims 25 to 27, wherein a number will be assigned to the second new chunk and it is a number following the number of the last chunk in the file system before the truncation.

29. The method for truncating data from a file system according to claim28,
wherein the number of chunk goes before the first new chunk will be the same with the original chunk before truncation and the number of chunk goes after the first new chunk will be the number of the second new chunk.

30. The method for truncating data from a file system according to claim 29,
wherein the number of chunks goes before the second new chunk will be the number of the original chunk before the truncation and the number of chunk goes after the second new chunk will be the number of chunk goes after the original chunk before the truncation.

31. A file managing system, including
blocks having identical size and being sequentially numbered, and
chunks being sequentially numbered with each chunk comprising at least one block, data in chunks being continuously allocated,
wherein the former part of the first block in a chunk is not occupied by data.

32. The file managing system according to claim 31, wherein the latter part of the last block in the chunk is not occupied by data.

33. The file managing system according to claim 32, wherein it further includes a storage device which stores a first descriptor describing the size of the former part not occupied by data in the first block of the chunk.

34. The file managing system according to claim 33, wherein the storage device further stores a second descriptor describing the size of the latter part not occupied by data in the last block of the chunk..

35. The file managing system according to claim 34, wherein the storage device further stores a third descriptor describing the starting position of the chunk.

36. The file managing system according to claim 35, wherein the storage device further stores a fourth descriptor describing the length of data in the chunk.

37. The file managing system according to claim 33, wherein the storage device further stores a fifth descriptor and a sixth descriptor describing the number of chunk goes before a current chunk and the number of chunk goes after the current chunk.

38. An apparatus for reading data from a file system, the file system including blocks having identical size and being sequentially numbered, and chunks being sequentially numbered with each chunk comprising at least one block, wherein at the beginning of the first block and at the end of the last block in a chunk, part of the space is not occupied by data, the reading apparatus comprising
a means for determining the size of data planned to be read out from the file system,
a means for determining the position where the reading operation starts in a chunk,
a means for determining the size of available data in the current chunk, which is the size of data from the position where the reading operation starts to the end of the chunk, wherein the part of space that has not been occupied by data in the current chunk will not be counted into the available data, and
a means for reading out data with a size being a function of the data planned to be read out from the file system and the available data in the current chunk.

39. An apparatus for writing data from a file system, the file system including blocks having identical size and being sequentially numbered, and chunks being sequentially numbered with each chunk comprising at least one block, wherein at the beginning of the first block and the at the end of the last block and at the end of the last block in a chunk, part of the space is not occupied by data, the writing apparatus comprising
a means for determining the size of data planned to be written into the file system,
a means for determining the position where the writing operation starts in a chunk, and
a means for determining the size of available space in the current chunk,
wherein it is the size of space in the current chunk from the position where the writing operation starts to the end of the chunk when the chunk is the last chunk in the file system, otherwise, the labeled out size in the chunk should be excluded.

40. An apparatus for truncating data from a file system, the file system including blocks having identical size and being sequentially numbered, and chunks being sequentially numbered with each chunk comprising at least one block, wherein at the beginning of the first block and the at the end of the last block in a chunk, part of the space is not occupied by data, the truncating apparatus comprising
a means for determining the size of data planned to be truncated from the file system,
a means for determining the position where the truncating operation starts in a chunk,
a means for truncating a number of data from the current chunk, and
if the size of data truncated from a block inside the current chunk together with the size of part of space that has not been occupied in the block equals to the identical size of block, releasing the space of this block.
